# EUROPEAN PATENT APPLICATION

(11) **EP 4 528 253 A1**
(43) Date of publication of application: **26.03.2025**
(21) Application number: 22942425.4
(22) Date of filing: 25.10.2022
(51) Int. Cl.: G01N 21/64, G01N 21/01, G02B 21/00

(54) **SUPER-RESOLUTION SINGLE-OBJECTIVE LIGHT-SHEET OPTICAL MICROSCOPY SYSTEM AND IMAGING SYSTEM COMPRISING SAME**

(30) Priority: 16.05.2022 CN 202210527771
(71) Applicant: Institute of Biophysics Chinese Academy of Sciences, Chaoyang District Beijing 100101 (CN)
(72) Inventor: LI, Dong, Beijing 100101 (CN); DONG, Xue, Beijing 100101 (CN); YANG, Xiaoyu, Beijing 100101 (CN)
(74) Representative: advotec.
(86) International application number: PCT/CN2022/127301
(87) International publication number: WO 2023/221400

(57) **Abstract**

A super-resolution single-objective light-sheet optical microscopy system and method, and a related imaging system. The super-resolution single-objective light-sheet optical microscopy system comprises: a light source module (100), which is configured to output laser beams having a single wavelength or multiple wavelengths; a light sheet generation and phase adjustment module (200), which is configured to receive the laser beams having a single wavelength or multiple wavelengths and output two light sheets; a scanning module (300); a single objective (400), which is located downstream the scanning module (300), wherein the scanning module (300) is configured to guide the two light sheets, which are output by the light sheet generation and phase adjustment module (200), to the single objective (400), and the single objective (400) is configured to allow the two light sheets to transmit through same and interfere with each other to generate structured light fringe regions (T1000, T2000, T3000), and the single objective (400) is further configured to receive a fluorescence signal; and a fluorescence detection module (500), which is configured to record the fluorescence signal received by the single objective (400).

## Description

### FIELD

The present disclosure relates to the field of super-resolution microscopy system, and in particular to a super-resolution single-objective light-sheet microscopy method and system.

### BACKGROUND

The emergence of optical microscopy has provided a direct means to observe dynamic processes of biological activities, greatly accelerating the development of life sciences research. Due to the wave nature of light, the resolution of traditional optical microscopy is limited, which severely hinders the observation of fine biological activities. Therefore, overcoming the diffraction limit to achieve higher resolution has been a long-standing goal in the field of optical microscopy research. In recent years, super-resolution microscopy technology, which overcomes the diffraction limit, has been continuously developed. Currently, super-resolution microscopy is divided into three main categories: (1) Stimulated Emission Depletion (STED) microscopy technology; (2) Single-Molecule Localization Microscopy technology; and (3) Structured Illumination Microscopy (SIM) technology. Super-resolution microscopy systems based on STED technology require high light intensities, which could cause photobleaching and phototoxicity, posing significant harm to live biological samples. Single-molecule localization microscopy sacrifices time resolution for spatial resolution, making it less suitable for high-speed dynamic imaging. Structured illumination microscopy (SIM) uses wide-field illumination and does not require high laser power, making it more suitable for high-speed live imaging compared to the other two super-resolution technologies. However, in the case of three-dimensional structured light microscopy, SIM illuminates the entire sample, increasing the photobleaching and reconstruction artifacts caused by defocusing signals.

Light-sheet Fluorescence Microscopy (LSFM), unlike traditional wide-field microscopy, employs a sheet-like light source to illuminate the sample, with separate excitation and detection optical paths, which effectively avoids defocusing signals and significantly reduces photobleaching. However, traditional light-sheet microscopy systems also have operational limitations. Firstly, the configuration of the excitation and detection objectives often restricts the use of standard slides and multi-well plates, requiring customed design for sample preparation and fixation. Secondly, mechanical limitations: a sufficiently long working distance is necessitated for the objective to meet imaging conditions, which restricts the numerical aperture of the objective and consequently the imaging resolution.

**In** recent years, single-objective light-sheet microscopy technology has been developed, which no longer uses the traditional perpendicular and independent excitation and detection objectives. Instead, a single objective serves both as the excitation and detection objective for collecting fluorescence signals and an inclined image plane is detected by remote focusing, thereby overcoming the sample limitations of traditional light-sheet microscopes and making them suitable for imaging various types of samples. Although light-sheet fluorescence microscopy excels in long-term and high-speed imaging, its spatial resolution is not very high. Therefore, combining single-objective light-sheet microscopy technology with structured illumination super-resolution microscopy technology would provide great convenience for high-resolution, high-speed three-dimensional live imaging. This combination is crucial for the study of cells, tissues, and embryos in fields of life sciences such as developmental biology and neurobiology.

### SUMMARY

The present disclosure mainly aims to combine single-objective light-sheet microscopy technology with structured illumination super-resolution microscopy technology in order to achieve super-resolution single-objective light-sheet microscopy, particularly for three-dimensional super-resolution microscopy.

**In** view of the above, in a first aspect, the present disclosure provides in embodiments a super-resolution single-objective light-sheet optical microscopy system, including:
a light source module, configured to output a laser beam with a single wavelength or multiple wavelengths;
a light sheet generation and phase adjustment module, configured to
   receive the laser beam with a single wavelength or multiple wavelengths, and output two light sheets,
a scanning module, configured to guide the two light sheets outputted by the light sheet generation and phase adjustment module to a single objective,
   the single objective, arranged downstream of the scanning module, and configured to allow the guided two light sheets to pass therethrough and interfere with each other to form a structured light stripe region, and
   receive fluorescence signals,
a fluorescence detection module, configured to record the fluorescence signal received by the single objective.

In some embodiments, the scanning module is configured to allow the structured light stripe region to move for scanning along a direction; and
the fluorescence detection module is configured to synchronously record the fluorescence signal received by the single objective during the scanning.

According to embodiments of the present disclosure, the fluorescence signal is generated by the structured light stripe region illuminating a sample under imaging.

In some embodiments, the light sheet generation and phase adjustment module includes a spatial light modulator, a half-wave plate, a polarizing beam splitter, a cylindrical lens, and a mask.

In some embodiments, the spatial light modulator, the half-wave plate, and the polarizing beam splitter are arranged in a configuration forming a phase grating, such that the laser beam with a single wavelength or multiple wavelengths generates light components of positive and negative multiple orders after passing through the phase grating.

In some embodiments, the polarizing beam splitter is configured to reflect the laser beam with a single wavelength or multiple wavelengths towards the half-wave plate, such that
the reflected laser beam with a single wavelength or multiple wavelengths passes through the half-wave plate before being incident on the spatial light modulator,
the spatial light modulator is configured to be switchable between at least two different states, under which, the spatial light modulator defines accordingly different patterns for generating the light components of positive and negative multiple orders.

In some embodiments, the mask is
configured to retain only the light components of positive and negative first orders, while filtering out the light components of all other orders, and
arranged downstream of the cylindrical lens, such that the two light sheets are generated after the light components of positive and negative multiple orders passing through the cylindrical lens and the mask.

In some embodiments, the structured light stripe region includes a first structured light stripe region under a first perspective and a second structured light stripe region under a second perspective;
the spatial light modulator is switchable between:
a first state, in which, the spatial light modulator defines a first diffraction pattern, allowing a first pair of the two light sheets, for forming the first structured light stripe region under the first perspective, to be outputted from the light sheet generation and phase adjustment module; and
a second state, in which, the spatial light modulator defines a second diffraction pattern different from the first diffraction pattern, allowing a second pair of the two light sheets, for forming the second structured light stripe region under the second perspective, to be outputted from the light sheet generation and phase adjustment module.

In some embodiments, the scanning module includes a first galvo mirror and a second galvo mirror,
the first galvo mirror is configured to receive the two light sheets outputted by the light sheet generation and phase adjustment module and reflect the same towards the second galvo mirror, and
the second galvo mirror is configured to reflect the two light sheets towards the single objective.

In some embodiments, the super-resolution single-objective light-sheet optical microscopy system further includes a dichroic mirror,
arranged between the single objective and the second galvo mirror, and
configured to
   allow the two light sheets to pass therethrough, and
   reflect the fluorescence signal towards the fluorescence detection module,
wherein the fluorescence detection module includes
   a camera for recording the fluorescence signal; and
   a conical lens or a microlens array, arranged upstream of the camera.

In some embodiments, the super-resolution single-objective light-sheet optical microscopy system further includes a dichroic mirror,
arranged between the single objective and the first galvo mirror, and
configured to
   allow the two light sheets to pass therethrough, and
   reflect the fluorescence signal towards the fluorescence detection module,
wherein the fluorescence detection module includes a camera for recording the fluorescence signal, an eighth lens, a third lens, and a stair step,
the eighth lens and the third lens are arranged between the dichroic mirror and the camera in a configuration forming a 4F system,
the third lens is closer to the dichroic mirror than the eighth lens, and
the stair step is arranged at a focal plane of the third lens .

In some embodiments, the super-resolution single-objective light-sheet optical microscopy system further includes a first lens and a second lens, arranged between the single objective and the second galvo mirror in a configuration forming a 4F system,
wherein the fluorescence detection module further includes a third lens arranged upstream of the conical lens or the microlens array,
the first lens and the third lens are arranged between the single objective and the conical lens or the microlens array in the configuration forming the 4F system,
the dichroic mirror is arranged between the first lens and the second lens.

In some embodiments, the super-resolution single-objective light-sheet optical microscopy system further includes
a fourth lens and a fifth lens, arranged between the second galvo mirror and the first galvo mirror in a configuration forming a 4F system, wherein the second galvo mirror is conjugated with the first galvo mirror through the fourth lens and the fifth lens, and
a dichroic mirror, arranged between the fifth lens and the first galvo mirror, and configured to allow the two light sheets to pass therethrough and reflect the fluorescence signal towards the fluorescence detection module.

In some embodiments, the fluorescence detection module includes
a camera for recording the fluorescence signal;
a second objective,
a third objective,
a sixth lens,
a seventh lens, and
a galvo-mirror-reflector system,
wherein the second objective and the third objective are arranged upstream of the camera, and optical axes of which form a non-zero angle,
the sixth lens and the seventh lens are arranged between the dichroic mirror and the second objective in the configuration forming the 4F system,
the seventh lens is closer to the second objective than the sixth lens, and
the galvo-mirror-reflector system is arranged between the dichroic mirror and the seventh lens, allowing fluorescence images under different perspectives to be imaged in a same direction.

In some embodiments, the galvo-mirror-reflector system includes:
a third galvo mirror,
a fourth galvo mirror or additional reflector,
a second reflector,
a third reflector,
a fourth reflector, and
a fifth reflector ,
wherein the third galvo mirror and the fourth galvo mirror or additional reflector are arranged between the dichroic mirror and the sixth lens,
the second reflector, the third reflector, and the fourth reflector are arranged between the third galvo mirror and the fourth galvo mirror or additional reflector,
the fifth reflector is arranged between the sixth lens and the seventh lens,
the third galvo mirror is operable to
   under the first perspective and one of the second perspectives, allow the fluorescence signal sequentially to pass through the third galvo mirror, the second reflector, the fourth reflector, the fourth galvo mirror or additional reflector, the sixth lens, the fifth reflector, and the seventh lens, before reaching the second objective;
   under the first perspective and another one of the second perspectives, allow the fluorescence signal sequentially to pass through the third galvo mirror, the third reflector, the fourth galvo mirror or additional reflector, the sixth lens, the fifth reflector, and the seventh lens, before reaching the second objective.

In some embodiments, one or both of the first galvo mirror and the second galvo mirror is (are) operated to move the structured light stripe region for scanning.

In some embodiments, for two-dimensional super-resolution microscopy, the first structured light stripe region under the first perspective and the second structured light stripe region under the second perspective are moved along perpendicular directions to each other for scanning.

In some embodiments, for three-dimensional super-resolution microscopy, the first structured light stripe region under the first perspective and the second structured light stripe region under the second perspective are moved along a same straight line but in opposite directions for scanning.

In some embodiments, the light sheet generation and phase adjustment module further includes a beam expansion and filtering submodule,
configured to expand and/or filter the laser beam with a single wavelength or multiple wavelengths,
arranged to allow the laser beam with a single wavelength or multiple wavelengths to first pass through the beam expansion and filtering submodule once entering the light sheet generation and phase adjustment module.

In some embodiments, the mask is arranged in a configuration conjugating with the first galvo mirror.

In some embodiments, two lens are arranged, in a configuration forming a 4F system,
between the mask and the first galvo mirror; and/or
between the first galvo mirror and the second galvo mirror; and/or
between the second galvo mirror and the single objective.

In a second aspect, the present disclosure provides in embodiments a super-resolution single-objective light-sheet microscopy system, including:
a microscope stage with a plane for carrying a sample under imaging, and
a super-resolution single-objective light-sheet optical microscopy system according to any one of embodiments of the present disclosure,
wherein an optical axis of a single objective in the super-resolution single-objective light-sheet optical microscopy system is at 90-degree angle to the plane.

By adopting the super-resolution single-objective light-sheet optical microscopy technology provided in the embodiments of the present disclosure, two light sheets are generated by the specially designed light sheet generation and phase adjustment module, and the structured light stripes are formed through interference of the two light sheets, ensuring that the overall optical system has a simple and stable optical path. Additionally, in the embodiments of the present disclosure, the single objective serving both as the excitation and detection objective, is used to achieve two-dimensional or three-dimensional super-resolution microscopy, suitable for standard slides, as well as multi-well plates. Compared to traditional light sheet systems with separate excitation and detection objectives, the system provided in the embodiments of the present disclosure is more convenient for arranging the sample under imaging, thereby increasing the applicability. Furthermore, the optical system provided in the embodiments of the present disclosure combines the advantages of light-sheet microscopy and structured illumination microscopy, reducing photobleaching and minimizing the effects of reconstruction artifacts caused by defocusing signals, thus laying the foundation for high-resolution, high-speed, three-dimensional live imaging.

### BRIEF DESCRIPTION OF THE DRAWINGS

Principles and various aspects of embodiments of the present disclosure will become more comprehensively appreciated from the following descriptions made with reference to the drawings. It should be noted that the scale of the figures may differ for the purpose of clarity, but this will not affect the understanding of the present application. In the figures:
Figure 1 schematically shows a block diagram of a super-resolution single-objective light-sheet optical microscopy system according to embodiments of the present disclosure;
Figure 2 schematically shows an optical path diagram of an example of a light source module according to embodiments of the present disclosure;
Figure 3 schematically shows an optical path diagram of an example of a light sheet generation and phase adjustment module according to embodiments of the present disclosure;
Figure 4 schematically shows an optical path diagram of an example of a scanning module and a single objective according to embodiments of the present disclosure;
Figure 5A schematically shows a partial optical path of an example of a fluorescence detection module according to embodiments of the present disclosure;
Figure 5B schematically shows a partial optical path of another example of a fluorescence detection module according to embodiments of the present disclosure;
Figure 5C schematically shows a partial optical path of yet another example of a fluorescence detection module according to embodiments of the present disclosure;
Figures 6A to 6F schematically show situations after two light sheets pass through a single objective in a super-resolution single-objective light-sheet optical microscopy system according to embodiments of the present disclosure under different perspectives as well as corresponding distribution of the two light sheets at rear pupil plane of the single objective;
Figure 7A schematically shows a scanning process under a perspective in a two-dimensional super-resolution microscopy mode;
Figure 7B schematically shows image data information of obtained fluorescence signals corresponding to Figure 7A;
Figure 7C schematically shows a scanning process under another perspective in the two-dimensional super-resolution microscopy mode;
Figure 7D schematically shows image data information of obtained fluorescence signals corresponding to Figure 7C;
Figure 8A schematically shows a scanning process under a perspective in a three-dimensional super-resolution microscopy mode;
Figure 8B schematically shows image data information of obtained fluorescence signals corresponding to Figure 8A;
Figure 8C schematically shows a scanning process under another perspective in the three-dimensional super-resolution microscopy mode;
Figure 8D schematically shows image data information of obtained fluorescence signals corresponding to Figure 8C;
Figure 9 schematically shows an optical path diagram of a super-resolution single-objective light-sheet optical microscopy system according to an embodiment of the present disclosure;
Figure 10 schematically shows an optical path diagram of a super-resolution single-objective light-sheet optical microscopy system according to another embodiment of the present disclosure; and
Figure 11 schematically shows an optical path diagram of a fluorescence detection module according to an embodiment of the present disclosure.

### DETAILED DESCRIPTION

In the figures of the present disclosure, features with the same structure or similar functions are represented by the same reference numbers.

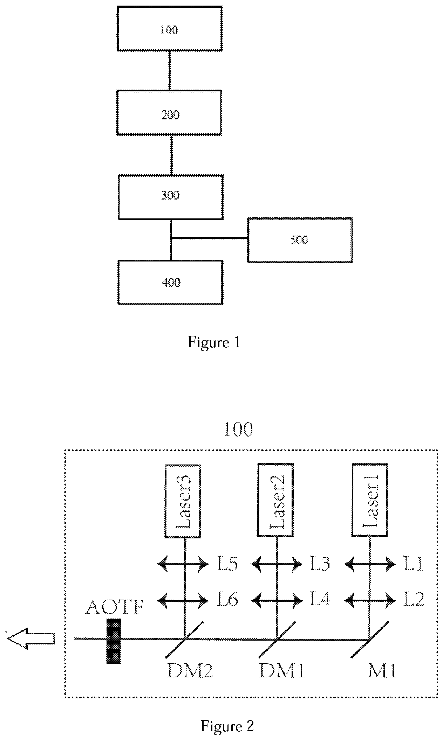

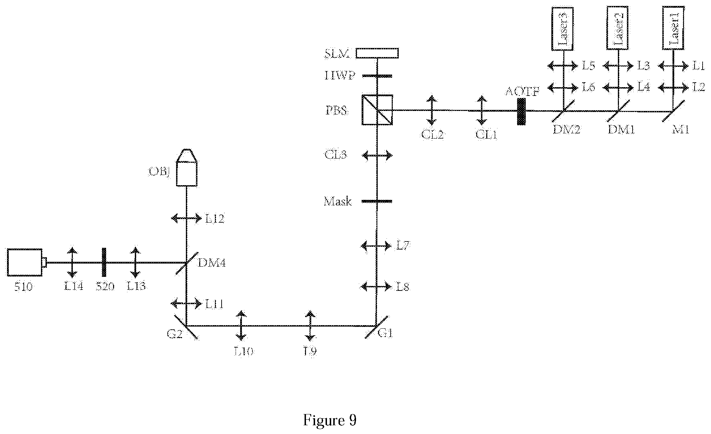

Figure 1 schematically shows a block diagram of a super-resolution single-objective light-sheet optical microscopy system according to one embodiment of the present disclosure, and figure 9 schematically shows the optical path diagram of a super-resolution single-objective light-sheet optical microscopy system according to the embodiment of the present disclosure. According to the embodiments of the present disclosure, the super-resolution single-objective light-sheet optical microscopy system includes a light source module (100), a light sheet generation and phase adjustment module (200), a scanning module (300), a single objective (400), and a fluorescence detection module (500). When the super-resolution single-objective light-sheet optical microscopy system according to the embodiments of the present disclosure operates, the light source module (100) outputs a laser beam with a single wavelength or multiple wavelengths, which is incident on the light sheet generation and phase adjustment module (200). The light sheet generation and phase adjustment module (200) then generates two light sheets with a predetermined spatial relationship. The two light sheets are modulated as needed by the scanning module (300), allowing them to illuminate a sample (not shown) placed on the microscope stage of the super-resolution single-objective light-sheet optical microscopy system through the single objective (400). During this process, the two light sheets interfere at a plane where the sample is located, thus forming structured light to illuminate the sample. Meanwhile, fluorescence generated by the illuminated sample is received by the same single objective (400) and collected by fluorescence detection module (500). Since the excited fluorescence signals carry super-resolution information generated by the structured illumination, two-dimensional or three-dimensional super-resolution single-objective light-sheet microscopy could be ultimately achieved by a predetermined scanning process carried out by the scanning module (300).

Figure 2 schematically shows an optical path diagram of an example of a light source module (100) according to embodiments of the present disclosure. According to the embodiments of the present disclosure, the light source module (100) could include one or more lasers. For example, each laser could emit a laser beam of a different wavelength. Examples of available lasers includes those with wavelengths of 405 nm, 445 nm, 488 nm, 561 nm, 640 nm, and so on. In the shown examples, the light source module (100) is shown to include three lasers: Laser1, Laser2, and Laser3. These three lasers, Laser1, Laser2, and Laser3, could emit laser beams of different wavelengths. Each of these three lasers, Laser1, Laser2, and Laser3, is equipped with a lens group (L1 and L2, L3 and L4, L5 and L6, respectively), such that after being emitted from the corresponding laser, the laser beams are expanded into collimated beams of equal diameter through the their respective lens group. The collimated beams of equal diameter from the different lasers are integrated into a single laser beam by a reflector M1 and dichroic mirrors (or beam splitters) DM1, and DM2.

In a preferred or optional embodiment, an acousto-optic tunable filter (AOTF) is arranged downstream of the dichroic mirror DM2 in the optical path of the single laser beam, such that the single laser beam could be incident on the AOTF. The acousto-optic tunable filter (AOTF) is used to selectively ensure a light of a specific wavelength to pass therethrough and to control the power of the light outputted thereof.

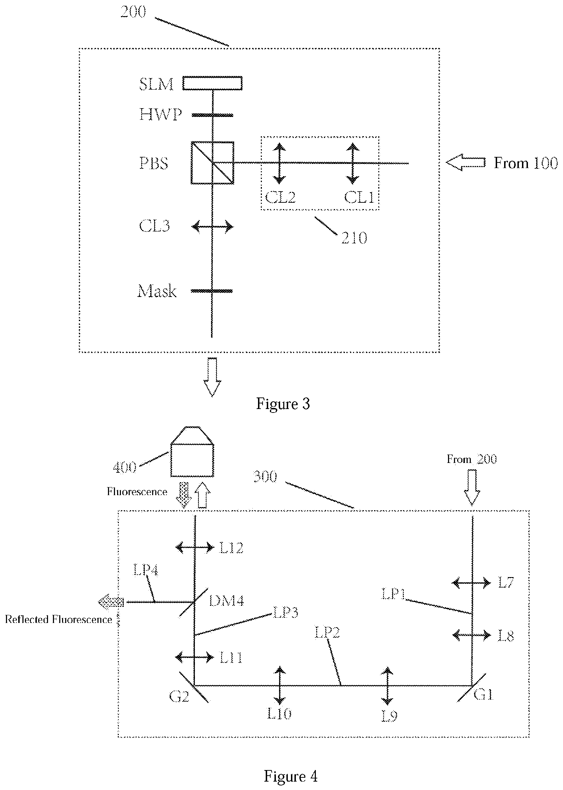

Figure 3 schematically shows an optical path diagram of an example of the light sheet generation and phase adjustment module (200) according to embodiments of the present disclosure. According to the embodiments of the present disclosure, the light sheet generation and phase adjustment module (200) mainly includes a spatial light modulator (SLM), a half-wave plate (HWP), and a polarizing beam splitter (PBS), a cylindrical lens CL3, a mask, and a beam expansion and filtering submodule (210). The beam expansion and filtering submodule (210) includes a first cylindrical lens CL1 and a second cylindrical lens CL2, which stretch the single laser beam from the light source module (100) along one dimension, transforming it into a rectangular parallel beam upon emission. The first cylindrical lens CL1 and a second cylindrical lens CL2 form an expansion system in a manner well understood by those skilled in the field.

In the shown examples, the spatial light modulator (SLM) could be a binary spatial light modulator, and the half-wave plate (HWP) could be an achromatic half-wave plate. The spatial light modulator (SLM), the half-wave plate (HWP), and the polarizing beam splitter (PBS) are arranged in a configuration forming a phase grating, such that the rectangular parallel beam from the beam expansion and filtering submodule (210) generates light components of positive and negative multiple orders after passing through the phase grating. Specifically, the spatial light modulator (SLM), the half-wave plate (HWP), and the polarizing beam splitter (PBS) are arranged such that as linearly polarized light, the rectangular parallel beam from the beam expansion and filtering submodule (210) is first reflected by the polarizing beam splitter (PBS) toward the half-wave plate (HWP) and the spatial light modulator (SLM). Then the reflected linearly polarized light passes through the half-wave plate (HWP), which rotates its phase by π/8, and is incident on the spatial light modulator (SLM). The spatial light modulator (SLM) is covered with multiple pixels, each of which could switch between ON and OFF states as needed. In this way, through intentional design, the pixels on the spatial light modulator (SLM) in different states could rotate an incident light in the polarization direction by either π/4 to the left or right and reflect it. The reflected light from the spatial light modulator (SLM) passes through the half-wave plate (HWP) again, which rotate its phase accordingly, and finally exits through the polarization beam splitter (PBS). Thus, due to modulation by the pixels on the spatial light modulator (SLM) under ON or OFF states, the lights exiting the polarization beam splitter (PBS) have a π phase difference between each other. In other words, a diffraction pattern displayed on the spatial light modulator (SLM) could be treated as a phase-type grating. By designing an algorithm (such as controlling the ON or OFF states of the pixels), different diffraction patterns could be generated, enabling the realization of cosine stripe light output.

The light components of positive and negative multiple orders generated by the phase grating are incident on the cylindrical lens CL3 to produce light sheets. A mask is arranged downstream of the cylindrical lens CL3. The mask is specifically arranged at the focal point of the cylindrical lens CL3, such that only light components of a positive and negative first orders are retained and light components of other orders are filtered out, thereby generating two light sheets. The two light sheets are spaced apart relative to an optical axis.

Figure 4 schematically shows an optical path diagram of an example of the scanning module (300) according to embodiments of the present disclosure. The scanning module (300) defines an optical path, or a portion of the optical path, which is shown in three segments: Lp1, Lp2, and Lp3. A first galvo mirror (also called a laser galvanometer) (G1) is arranged at junction of the optical path segments Lp1 and Lp2, and a second galvo mirror (also called a laser galvanometer) (G2) is arranged at junction of the optical path segments Lp2 and Lp3. The optical path segment Lp1 is configured to receive the two light sheets from the light sheet generation and phase adjustment module (200). Those skilled in the field reading this specification, when encountering any related optical terms such as 'galvo mirror (or laser galvanometer)', 'conjugate', ' 4F', etc., or their working principles, may refer to any publicly known technical documents in the field, including technical dictionaries, manuals, and textbooks. In addition, the first galvo mirror G1 is aslo arranged in a configuration conjugating with the second galvo mirror G2.

In a preferred embodiment, in the optical path segment Lp1, a lens L7 and a lens L8 are arranged between the mask and the first galvo mirror (G1) in a configuration forming a 4F system. L8 and L9, as well as L9 and L10, are arranged in the configuration forming the 4F system. The single objective (400) is arranged downstream of the scanning module (300). For example, the single objective (400) is arranged coaxially with the optical path segment Lp3. The single objective (400) (its rear pupil) is arranged in a configuration conjugating with the second galvo mirror (G2). In a preferred embodiment, in the optical path segment Lp3, a lens L11 and a lens L12 is arranged between the second galvo mirror (G2) and the single objective (400) in the configuration forming the 4F system. According to the above optical path arrangement, the rear pupil of the single objective (400) is conjugate to the first galvo mirror (G1), the second galvo mirror (G2) and the mask.

In the embodiments of the present disclosure, the first galvo mirror (G1) and the second galvo mirror (G2) are configured to rotate around an axis according to the scanning requirements.

A dichroic mirror (or beam splitter) DM4 is arranged between lenses L11 and L12, located in the optical path segment Lp3. The dichroic mirror (or beam splitter) DM4 is configured to allow a beam traveling sequentially through the optical path segments Lp1 and Lp2 to pass therethrough directly. After passing through the single objective (400), the beam illuminates the sample, generating fluorescence. The resulting fluorescence is incident on the single objective (400) along the optical path segment Lp3 and is reflected by the dichroic mirror DM4 towards a camera (510).

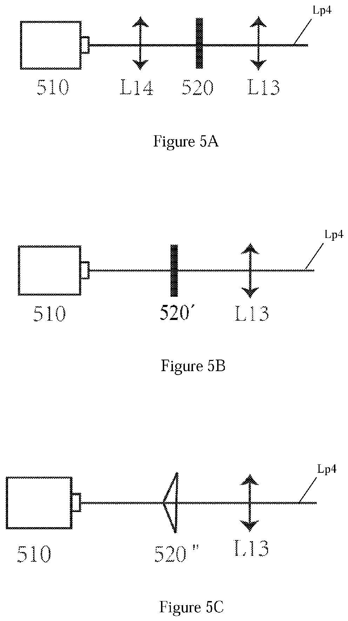

Figure 5A schematically shows a partial optical path of an example of the fluorescence detection module (500) according to embodiments of the present disclosure. The fluorescence detection module (500) defines an optical path segment Lp4, which is formed by reflection from the dichroic mirror DM4 and is perpendicular to the optical path segment Lp3. The camera (510) is provided in the fluorescence detection module (500) to capture the fluorescence. In the preferred embodiment, in the optical path segment Lp4, lenses L13 and L14 are arranged between the camera (510) and the dichroic mirror DM4, such that lenses L13 and L12 form the 4F system. A stair step (520) is arranged at a focal plane (a conjugate plane of an objective rear pupil) of the lens L13, with purpose of increasing an imaging depth of field. Technical details regarding the stair step (520) can be found in the already published literature, such as Abrahamsson et al., "A new approach to extended focus for high-speed, high-resolution biological microscopy", Three-Dimensional and Multidimensional Microscopy: Image Acquisition and Processing XIII, Volume 6090, 60900N (https://doi.org/10.1117/12.647022)". Downstream of the stair step (520), the lens L14 is arranged, forming the 4F system with L13. The camera (510) is arranged at a rear focal plane of the lens L14. The fluorescence detection module (500) further includes an optical path segment through which fluorescence received from the single objective (400) travels to the dichroic mirror DM4.

Since the single objective (400) in the optical microscopy system according to embodiments of the present disclosure serves both as the excitation and detection objective, the received fluorescence image is inclined. To capture this inclined image, traditional receiving optical paths require special objectives and complex beam steering designs to accommodate the imaging accordingly. In the fluorescence detection module (500) according to embodiments of the present disclosure, using the stair step (520) eliminates the need for such complex beam steering designs. In an alternative detection scheme embodiment, as shown in Figure 5B, a concept of Fourier domain light field imaging is used, where a microlens array (520') is arranged at a rear focal plane of L13, and the camera (510) is arranged behind the microlens array (520') for detection. A captured light field image is then reconstructed to obtain three-dimensional information of the sample for detection. In another alternative detection scheme embodiment, the imaging depth of field is extended by a concept of using a conical lens (520") to generate a Bessel beam. As shown in Figure 5C, the conical lens (520") is arranged behind the L13 according to the actual situation, and the camera (510) directly performs the detection.

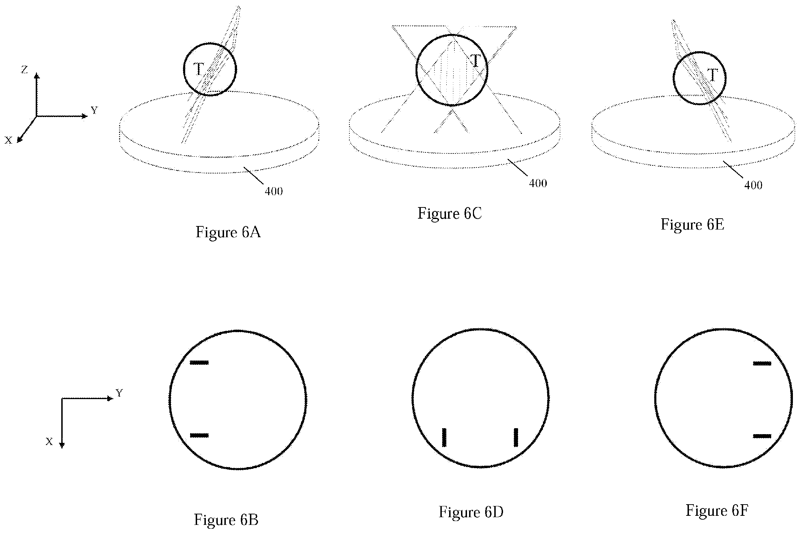

As mentioned above, the two light sheets outputted by the light sheet generation and phase adjustment module (200) passes through the scanning module (300) before being incident on the single objective (400). The two light sheets intersect with each other under a converging action of lens in the single objective (400) and interfere at the intersection (as shown in T region of Figures 6A, 6B, and 6C), thereby generating structured light stripes. To clearly explain the technology provided in embodiments of the present disclosure, a three-dimensional rectangular coordinate system XYZ or its projection onto the corresponding two-dimensional plane coordinate system is shown in the respective figures. Figures 6B, 6D and 6F show distribution of the two light sheets at the rear pupil plane of the single objective, corresponding to the two light sheets shown in Figures 6A, 6C and 6E, respectively. Based on different diffraction patterns given on the spatial light modulator (SLM), structured light stripe regions under different perspectives are formed by the corresponding the two light sheets emitted from the single objective (400). Accordingly, two-dimensional or three-dimensional super-resolution microscopy could be achieved by the super-resolution single-objective light-sheet optical microscopy system provided in embodiments of the present disclosure.

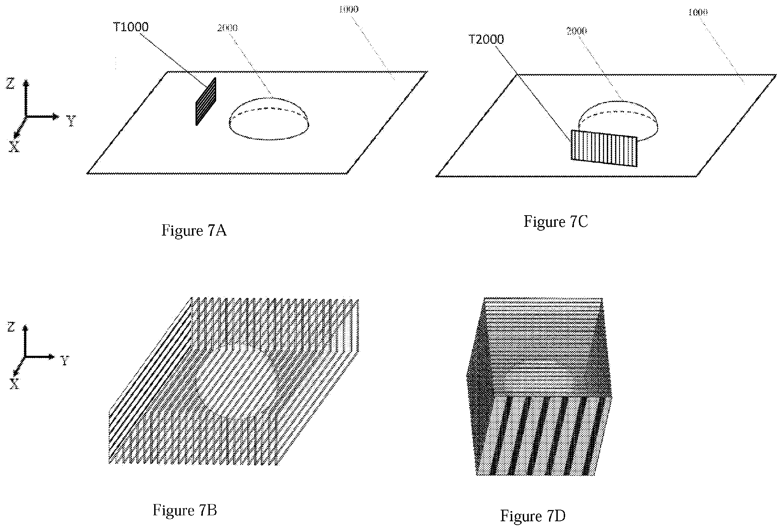

Further, for two-dimensional super-resolution microscopy, a sample (2000) is placed on a slide (1000), as shown in Figure 7A. Firstly, the light source module (100) is activated, and parameters of the light sheet generation and phase adjustment module (200) and the scanning module (300) are adjusted, such that the two light sheets (e.g., as shown in Figure 6A) are emitted from the single objective (400) and forms a structured light stripe region (T1000). For example, distribution of the two light sheets at rear pupil plane of the single objective under a perspective of Figure 6A, is shown in Figure 6B. After passing through the single objective (400), the two light sheets interfere and form the structured light stripe region (T1000), which could illuminate the sample (2000) on the slide (as shown in Figure 7A). For instance, the structured light stripe region (T1000) could be moved along Y-axis for scanning. A scanning process is achieved through a galvo mirror in the scanning module. For example, the first galvo mirror (G1) is configured to control scanning along the X-axis, and the second galvo mirror (G2) is configured to control scanning along the Y-axis. To achieve the scanning along the Y-axis, the first galvo mirror (G1) is fixed at an initial position, and the second galvo mirror (G2) rotates at a set interval angle, thus the structured light stripe region (T1000) being moved along the Y-axis. At the same time, fluorescence image data is recorded by the fluorescence detection module (500) at each position of increment in angle, serving as the fluorescence image data under a perspective (e.g., the first perspective) corresponding to the structured light stripe region (T1000) (as shown in Figure 7B). Next, parameters of the light sheet generation and phase adjustment module (200) and the scanning module (300) are adjusted, such that the two light sheets (e.g., as shown in Figure 6C) are emitted from the single objective (400) and forms a structured light stripe region (T2000). For example, distribution of the two light sheets at rear pupil plane of the single objective (400) under a perspective of Figure 6C, is shown in Figure 6D. After passing through the single objective (400), the two light sheets interfere and form the structured light stripe region (T2000), which could illuminate the sample (2000) on the slide (as shown in Figure 7C). For instance, the structured light stripe region (T2000) could be moved along X-axis for scanning. To achieve the scanning along the X-axis, the second galvo mirror (G2) is fixed at an initial position, and the first galvo mirror (G1) rotates at a set interval angle, thus the structured light stripe region (T2000) being moved along the X-axis. At the same time, fluorescence image data is recorded by the fluorescence detection module (500) at each position of increment in angle, serving as the fluorescence image data under a perspective (e.g., the second perspective) corresponding to the structured light stripe region (T2000) (as shown in Figure 7D). Those skilled in the field should be able to understand the specific implementation of moving the structured light stripe region in a particular direction, and can adjust and operate the first galvo mirror (G1) and/or the second galvo mirror (G2) as needed.

Finally, the image data under the two perspective are processed using a super-resolution reconstruction algorithm to fuse them, resulting in an imaging outcome with super-resolution effects in the XY plane.

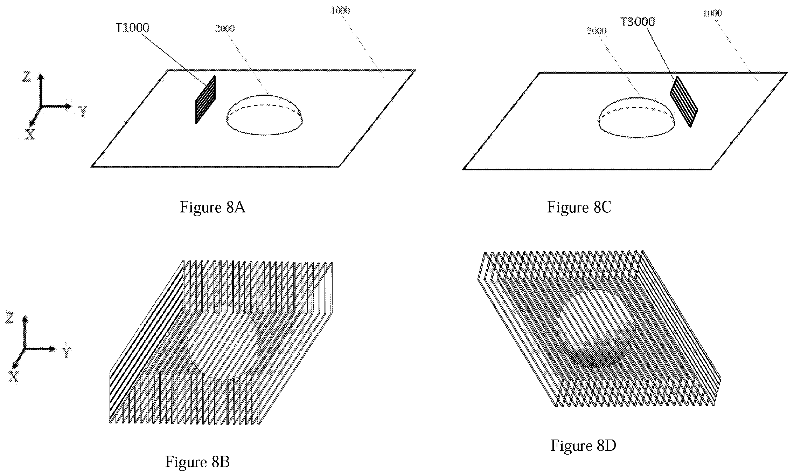

Further, for three-dimensional super-resolution microscopy, the structured light stripe region (T1000) under the first perspective is shown as Figure 8A. For example, structured light stripe region under the first perspective could be set up in the same way as shown in Figure 7A. **In** addition, a structured light stripe region (T3000) under the third perspective is shown as Figure 8C. For example, parameters of the light sheet generation and phase adjustment module (200) and the scanning module (300) are adjusted, such that the two light sheets (e.g., as shown in Figure 6E) are emitted from the single objective (400) and forms a structured light stripe region (T3000). For example, distribution of the two light sheets at rear pupil plane of the single objective under a perspective of Figure 6E is shown in Figure 6F. After passing through the single objective (400), the two light sheets interfere and form the structured light stripe region (T3000), which could illuminate the sample (2000) on the slide (as shown in Figure 8C). For instance, first, the light source module (100) is activated, and parameters of the light sheet generation and phase adjustment module (200) and the scanning module (300) are adjusted, such that the two light sheets (e.g., as shown in Figure 6A) are emitted from the single objective (400) and forms a structured light stripe region (T1000). For example, distribution of the two light sheets at rear pupil plane of the single objective under a perspective of Figure 6A, is shown in Figure 6B. After passing through the single objective (400), the two light sheets interfere and form the structured light stripe region (T1000), which could illuminate the sample (2000) on the slide (as shown in Figure 8A). For instance, the structured light stripe region (T1000) could be moved along Y-axis for scanning. A scanning process is achieved through a galvo mirror in the scanning module (300). For example, the first galvo mirror (G1) is configured to control scanning along the X-axis, and the second galvo mirror (G2) is configured to control scanning along the Y-axis. To achieve the scanning along the Y-axis, the first galvo mirror (G1) is fixed at an initial position, and the second galvo mirror (G2) rotates at a set interval angle, thus the structured light stripe region (T1000) being moved along the Y-axis. At the same time, fluorescence image data is recorded by the fluorescence detection module (500) at each position of increment in angle, serving as the fluorescence image data under the perspective (e.g., the first perspective) corresponding to the structured light stripe region (T1000) (as shown in Figure 8B). Next, parameters of the light sheet generation and phase adjustment module (200) and the scanning module (300) are adjusted, such that the two light sheets (e.g., as shown in Figure 6E) are emitted from the single objective (400) and forms a structured light stripe region (T3000). For example, distribution of the two light sheets at rear pupil plane of the single objective under the perspective of Figure 6E, is shown in Figure 6F. After passing through the single objective (400), the two light sheets interfere and form the structured light stripe region (T3000), which could illuminate the sample (2000) on the slide (as shown in Figure 8C). In contrast to two-dimensional super-resolution microscopy, the structural light stripe region T3000 is moved along the same Y-axis, but in the opposite direction to the movement of the structural light stripe region (T1000). For instance, similarly, the second galvo mirror (G2) is controlled to rotate in an opposite direction, and the first galvo mirror (G1) is fixed at the initial position. Fluorescence image data is recorded by the fluorescence detection module (500) at each position corresponding to different angles of rotation of the second galvo mirror (G2), serving as the fluorescence image data the fluorescence image data under a perspective (e.g., the third perspective) corresponding to the structured light stripe region (T3000) (as shown in Figure 8D). Each fluorescence image data acquired under different perspectives are processed using deep learning methods to acquire two-dimensional super-resolution images based on one-dimensional structured illumination light-sheet microscope. By fusing the two-dimensional super-resolution images under the two perspectives, a three-dimensional super-resolution image is obtained, which exhibits super-resolution effects in all XYZ dimensions. The specific details of the deep learning methods, could refer to in the patent publication CN113917677A.

As shown in Figures 7A, 7C, 8A, and 8C, the slide (1000) could be placed on the microscope stage. In other words, the microscope stage is defined with a plane for carrying a sample under imaging. Therefore, a super-resolution microscopy system generally includes a microscope stage and the super-resolution single-objective light-sheet optical microscopy system provided in above embodiments of the present disclosure, where the optical axis of the single objective (400) is at 90-degree angle to the plane for carrying a sample under imaging.

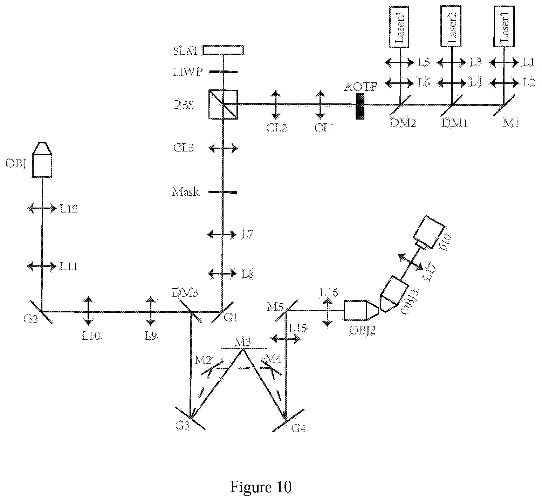

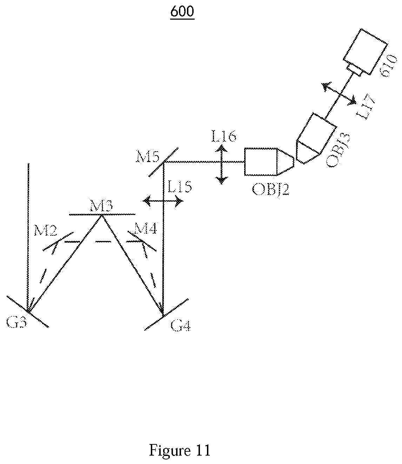

For three-dimensional super-resolution microscopy, Figure 10 schematically shows an optical path diagram of a super-resolution single-objective light-sheet optical microscopy system according to another embodiment of the present disclosure. By comparing the embodiments shown in Figure 10 with Figures 9 and 1, it can be seen that the main difference between the optical system in Figure 10 and the one in Figure 9 is in the fluorescence detection module. Therefore, for simplicity, the same references used in the embodiment shown in Figure 10 can be referenced to descriptions of the above embodiments. As shown in Figure 10, the optical system includes a fluorescence detection module (600), replacing the fluorescence detection module (500). Figure 11 shows part of an optical path diagram of the fluorescence detection module (600).

In addition, as shown in the embodiment in Figure 10, compared to the embodiment in Figure 9, the dichroic mirror DM4 and the associated fluorescence detection module (500) are removed. Instead, a dichroic mirror DM3 is arranged between the lens L9 and the first galvo mirror (G1), such that the two light sheets could propagate in the direction from the first galvo mirror (G1) to the lens L9; and the fluorescence received by the single objective (400) is reflected towards the fluorescence detection module (600) (Figure 11) by the dichroic mirror DM3, after passing through the lens L12, lens L11, the second galvo mirror (G2), lens L10, and lens L9. Ignoring propagation directions of the excitation light and fluorescence, there is partial overlap between an optical path of the scanning module (300) to the single objective (400) and an optical path of the fluorescence detection module (600). Figure 11 only shows a nonoverlapping portion of the optical path of the fluorescence detection module (600).

As shown in Figure 11, the fluorescence detection module (600) includes a third galvo mirror (G3) and a fourth galvo mirror (G4). Between the third galvo mirror (G3) and the fourth galvo mirror (G4), three reflectors (a second reflector (M2), a third reflector (M3) and a fourth reflector (M4)) are arranged. In addition, downstream of the fourth galvo mirror (G4), a lens L15, a fifth reflector (M5), a lens L16, objectives OBJ2 and OBJ3, a lens L17 and a camera (610) are arranged in sequence. The optical axis of the objective OBJ2 forms a certain angle with the optical axis of the objective OBJ3. As mentioned above, since the fluorescence image is tilted, the angle between the optical axes of the objectives OBJ2 and OBJ3 is configured in such a way that it can precisely counteract this tilt.

In this embodiment, the rear pupil plane of the single objective (400) is conjugated with the second galvo mirror (G2) through the lenses L12 and L11; the second galvo mirror (G2) is conjugated with the first galvo mirror (G1) through the lenses L10 and L9; the focal plane of the lens L9 is conjugated with the rear pupil plane of the objective OBJ2 through the lenses L15 and L16; an image at the position of the objective OBJ2 is imaged onto the camera (610) via the objective OBJ3 and the lens L17.

The third galvo mirror (G3), the fourth galvo mirror (G4), the second reflector M2, and the fourth reflector M4 are configured such that when the reflected fluorescence under the first perspective is received by fluorescence detection module (600), the third galvo mirror (G3) is adjusted to an angle, allowing the fluorescence reflected by the dichroic mirror DM3 to propagate along a first path through the third galvo mirror (G3), the second reflector (M2), the fourth reflector (M4), and the fourth galvo mirror (G4), before passing through the lens L15 and further being received by the camera (610); and when the reflected fluorescence under the second perspective is received by fluorescence detection module (600), the third galvo mirror (G3) is adjusted to another angle, allowing the fluorescence reflected by the dichroic mirror DM3 to propagate along a second path through the third galvo mirror (G3), the third reflector (M3), and the fourth galvo mirror (G4), before passing through the lens L15 and further being received by the camera (610). Because the received fluorescence signals under two different perspectives are reflected by a different number of reflectors before reaching the camera (610), fluorescence images under different perspectives have the same imaging direction. Thus, there is no need to change the subsequent detection optical path when switching between different perspectives.

Although specific embodiments of the present disclosure have been described in detail herein, these embodiments are provided for explanatory purposes only and should not be construed as limiting the scope of the present disclosure. Furthermore, it should be understood by those skilled in the field that the various embodiments described herein can be combined with each other. Various modifications, changes, and alterations may be conceived without departing from the spirit and scope of the present disclosure.

## Claims

1. A super-resolution single-objective light-sheet optical microscopy system, comprising:
a light source module (100), configured to output a laser beam with a single wavelength or multiple wavelengths;
a light sheet generation and phase adjustment module (200), configured to receive the laser beam with a single wavelength or multiple wavelengths, and output two light sheets,
a scanning module (300), configured to guide the two light sheets outputted by the light sheet generation and phase adjustment module (200) to a single objective (400),
the single objective (400), arranged downstream of the scanning module (300), and configured to
allow the guided two light sheets to pass therethrough and interfere with each other to form a structured light stripe region (T), and
receive fluorescence signals,
a fluorescence detection module (500, 600), configured to record the fluorescence signal received by the single objective (400).

2. The super-resolution single-objective light-sheet optical microscopy system according to claim 1, wherein
the scanning module (300) is configured to allow the structured light stripe region (T) to move for scanning along a direction (X or Y); and
the fluorescence detection module (500, 600) is configured to synchronously record the fluorescence signal received by the single objective (400) during the scanning.

3. The super-resolution single-objective light-sheet optical microscopy system according to claim 1 or 2, wherein the fluorescence signal is generated by the structured light stripe region (T) illuminating a sample under imaging.

4. The super-resolution single-objective light-sheet optical microscopy system according to claim 1 or 2, wherein the light sheet generation and phase adjustment module (200) comprises a spatial light modulator (SLM), a half-wave plate (HWP), a polarizing beam splitter (PBS), a cylindrical lens (CL3), and a mask.

5. The super-resolution single-objective light-sheet optical microscopy system according to claim 4, wherein the spatial light modulator (SLM), the half-wave plate (HWP), and the polarizing beam splitter (PBS) are arranged in a configuration forming a phase grating, such that the laser beam with a single wavelength or multiple wavelengths generates light components of positive and negative multiple orders after passing through the phase grating.

6. The super-resolution single-objective light-sheet optical microscopy system according to claim 5, wherein
the polarizing beam splitter (PBS) is configured to reflect the laser beam with a single wavelength or multiple wavelengths towards the half-wave plate (HWP), such that
the reflected laser beam with a single wavelength or multiple wavelengths passes through the half-wave plate (HWP) before being incident on the spatial light modulator (SLM),
the spatial light modulator (SLM) is configured to be switchable between at least two different states, under which, the spatial light modulator (SLM) defines accordingly different patterns for generating the light components of positive and negative multiple orders.

7. The super-resolution single-objective light-sheet optical microscopy system according to claim 6, wherein the mask is
configured to retain only the light components of positive and negative first orders, while filtering out the light components of all other orders, and
arranged downstream of the cylindrical lens (CL3), such that the two light sheets are generated after the light components of positive and negative multiple orders passing through the cylindrical lens (CL3) and the mask.

8. The super-resolution single-objective light-sheet optical microscopy system according to claim 7, wherein
the structured light stripe region (T) comprises a first structured light stripe region (T1000) under a first perspective and a second structured light stripe region (T2000 or T3000) under a second perspective;
the spatial light modulator (SLM) is switchable between:
a first state, in which, the spatial light modulator (SLM) defines a first diffraction pattern, allowing a first pair of the two light sheets, for forming the first structured light stripe region (T1000) under the first perspective, to be outputted from the light sheet generation and phase adjustment module (200); and
a second state, in which, the spatial light modulator (SLM) defines a second diffraction pattern different from the first diffraction pattern, allowing a second pair of the two light sheets, for forming the second structured light stripe region (T2000 or T3000) under the second perspective, to be outputted from the light sheet generation and phase adjustment module (200).

9. The super-resolution single-objective light-sheet optical microscopy system according to claim 8, wherein the scanning module (300) comprises a first galvo mirror (G1) and a second galvo mirror (G2),
the first galvo mirror (G1) is configured to receive the two light sheets outputted by the light sheet generation and phase adjustment module (200) and reflect the same towards the second galvo mirror (G2), and
the second galvo mirror (G2) is configured to reflect the two light sheets towards the single objective (400).

10. The super-resolution single-objective light-sheet optical microscopy system according to claim 9, further comprising a dichroic mirror (DM4),
arranged between the single objective (400) and the second galvo mirror (G2), and configured to
allow the two light sheets to pass therethrough, and
reflect the fluorescence signal towards the fluorescence detection module (500),
wherein the fluorescence detection module (500) comprises
a camera (510) for recording the fluorescence signal; and
a conical lens (520") or a microlens array (520'), arranged upstream of the camera (510).

11. The super-resolution single-objective light-sheet optical microscopy system according to claim 9, further comprising a dichroic mirror (DM4),
arranged between the single objective (400) and the first galvo mirror (G1), and configured to
allow the two light sheets to pass therethrough, and
reflect the fluorescence signal towards the fluorescence detection module (500),
wherein the fluorescence detection module (500) comprises a camera (510) for recording the fluorescence signal, an eighth lens (L14), a third lens (L13), and a stair step (520),
the eighth lens (L14) and the third lens (L13) are arranged between the dichroic mirror (DM4) and the camera (510) in a configuration forming a 4F system,
the third lens (L13) is closer to the dichroic mirror (DM4) than the eighth lens (L14), and
the stair step (520) is arranged at a focal plane of the third lens (L13).

12. The super-resolution single-objective light-sheet optical microscopy system according to claim 10, further comprising a first lens (L12) and a second lens (L11), arranged between the single objective (400) and the second galvo mirror (G2) in a configuration forming a 4Fsystem,
wherein the fluorescence detection module (500) further comprises a third lens (L13) arranged upstream of the conical lens (520) or the microlens array ,
the first lens (L12) and the third lens (L13) are arranged between the single objective (400) and the conical lens (520) or the microlens array in the configuration forming the 4F system,
the dichroic mirror (DM4) is arranged between the first lens (L12) and the second lens (L11).

13. The super-resolution single-objective light-sheet optical microscopy system according to claim 9, further comprising
a fourth lens (L10) and a fifth lens (L9), arranged between the second galvo mirror (G2) and the first galvo mirror (G1) in a configuration forming a 4F system, wherein the second galvo mirror (G2) is conjugated with the first galvo mirror (G1) through the fourth lens (L10) and the fifth lens (L9), and
a dichroic mirror (DM3), arranged between the fifth lens (L9) and the first galvo mirror (G1), and configured to allow the two light sheets to pass therethrough and reflect the fluorescence signal towards the fluorescence detection module (600).

14. The super-resolution single-objective light-sheet optical microscopy system according to claim 13, wherein the fluorescence detection module (600) comprises
a camera (610) for recording the fluorescence signal;
a second objective (OBJ2),
a third objective (OBJ3),
a sixth lens (L15),
a seventh lens (L16), and
a galvo-mirror-reflector system,
wherein the second objective (OBJ2) and the third objective (OBJ3) are arranged upstream of the camera (610), and optical axes of which form a non-zero angle,
the sixth lens (L15) and the seventh lens (L16) are arranged between the dichroic mirror (DM3) and the second objective (OBJ2) in the configuration forming the 4F system,
the seventh lens (L16) is closer to the second objective (OBJ2) than the sixth lens (L15), and
the galvo-mirror-reflector system is arranged between the dichroic mirror (DM3) and the seventh lens (L16), allowing fluorescence images under different perspectives to be imaged in a same direction.

15. The super-resolution single-objective light-sheet optical microscopy system according to claim 14, wherein the galvo-mirror-reflector system comprises:
a third galvo mirror (G3),
a fourth galvo mirror (G4) or additional reflector,
a second reflector (M2),
a third reflector (M3),
a fourth reflector (M4), and
a fifth reflector (M5) ,
wherein the third galvo mirror (G3) and the fourth galvo mirror (G4) or additional reflector are arranged between the dichroic mirror (DM3) and the sixth lens (L15),
the second reflector (M2), the third reflector (M3), and the fourth reflector (M4) are arranged between the third galvo mirror (G3) and the fourth galvo mirror (G4) or additional reflector,
the fifth reflector (M5) is arranged between the sixth lens (L15) and the seventh lens (L16),
the third galvo mirror (G3) is operable to
under the first perspective and one of the second perspectives, allow the fluorescence signal sequentially to pass through the third galvo mirror (G3), the second reflector (M2), the fourth reflector (M4), the fourth galvo mirror (G4) or additional reflector, the sixth lens (L15), the fifth reflector (M5), and the seventh lens (L16), before reaching the second objective (OBJ2);
under the first perspective and another one of the second perspectives, allow the fluorescence signal sequentially to pass through the third galvo mirror (G3), the third reflector (M3), the fourth galvo mirror (G4) or additional reflector, the sixth lens (L15), the fifth reflector (M5), and the seventh lens (L16), before reaching the second objective (OBJ2).

16. The super-resolution single-objective light-sheet optical microscopy system according to any one of claims 9 to 15, wherein one or both of the first galvo mirror (G1) and the second galvo mirror (G2) is (are) operated to move the structured light stripe region (T1000, T2000, or T3000) for scanning.

17. The super-resolution single-objective light-sheet optical microscopy system according to claim 3, wherein for two-dimensional super-resolution microscopy, the first structured light stripe region (T1000) under the first perspective and the second structured light stripe region (T2000) under the second perspective are moved along perpendicular directions to each other for scanning.

18. The super-resolution single-objective light-sheet optical microscopy system according to claim 17, wherein for three-dimensional super-resolution microscopy, the first structured light stripe region (T1000) under the first perspective and the second structured light stripe region (T3000) under the second perspective are moved along a same straight line but in opposite directions for scanning.

19. The super-resolution single-objective light-sheet optical microscopy system according to claim 18, wherein the light sheet generation and phase adjustment module (200) further comprises a beam expansion and filtering submodule (210),
configured to expand and/or filter the laser beam with a single wavelength or multiple wavelengths,
arranged to allow the laser beam with a single wavelength or multiple wavelengths to first pass through the beam expansion and filtering submodule (210) once entering the light sheet generation and phase adjustment module (200).

20. The super-resolution single-objective light-sheet optical microscopy system according to claim 19, wherein the mask is arranged in a configuration conjugating with the first galvo mirror (G1).

21. The super-resolution single-objective light-sheet optical microscopy system according to claim 20, wherein two lens are arranged, in a configuration forming a 4F system,
between the mask and the first galvo mirror (G1); and/or
between the first galvo mirror (G1) and the second galvo mirror (G2); and/or
between the second galvo mirror (G2) and the single objective (400).

22. A super-resolution single-objective light-sheet microscopy system, comprising:
an microscope stage with a plane for carrying a sample under imaging, and
a super-resolution single-objective light-sheet optical microscopy system according to any one of claims 1 to 21,
wherein an optical axis of a single objective (400) in the super-resolution single-objective light-sheet optical microscopy system is at 90-degree angle to the plane.
